# EUROPÄISCHE PATENTSCHRIFT

(11) **EP 0 698 514 B1**
(45) Veröffentlichungstag und Bekanntmachung des Hinweises auf die Patenterteilung: **08.04.1998**
(21) Anmeldenummer: 95111889.2
(22) Anmeldetag: 28.07.1995
(51) Int. Cl.: B60D 5/00, B61D 17/22, B62D 47/02

(54) **Faltenbalg**
Bellows
Soufflet

(30) Priorität: 18.08.1994 DE 9413320 U
(43) Veröffentlichungstag der Anmeldung: 28.02.1996
(73) Patentinhaber: HÜBNER Gummi- und Kunststoff GmbH, D-34123 Kassel (DE)
(72) Erfinder: Koch,Robert, 37242 Bad Sooden-Allendorf (DE)
(74) Vertreter: Walter, Helmut, Dipl.-Ing.

(56) Entgegenhaltungen:
- EP-A- 0 215 329
- EP-A- 0 279 245
- EP-A- 0 562 598
- US-A- 2 183 250

## Beschreibung

Die Erfindung bezieht sich auf eine Übergangseinrichtung mit einem Faltenbalg, der als Übergangsschutz zwischen zwei über eine Gelenkverbindung miteinander verbundenen Fahrzeugen dient, dessen Seitenwände aus Materialstreifen bestehen, von denen jeweils zwei an den einander zugehörigen Längskanten durch ein aufgestecktes schienenförmiges Klemmprofil miteinander verbunden sind, wobei jeder Seitenwand im unteren Bereich eine Schürze zugeordnet ist, die einen Spalt überbrückt, der zwischen der Seitenwand und einer Plattform bzw. Drehscheibe der Gelenkverbindung besteht. Die Schürze ist den Seitenwänden entsprechend gefaltet und besteht ebenfalls aus Materialstreifen, von denen jeweils zwei an den einander zugehörigen Längskanten im Bereich von schienen- und bogenförmigen Profilen miteinander verbunden sind und die eine Materialbahn bilden. Die Profile der Schürzen sind an ihren oberen Enden mit den Klemmprofilen der jeweiligen Seitenwand zusammengeführt, sie haben jedoch zwischen ihren Enden einen den Spalt überbrückenden, vor der jeweiligen Seitenwand entsprechend beabstandeten Verlauf.

Es ist bekannt, zwischen gelenkig miteinander gekuppelten Fahrzeugen Übergangseinrichtungen anzuordnen, um Personen das Überwechseln von einem zum anderen der Fahrzeuge zu ermöglichen. Um diesen Personen das Überwechseln von Umgebungsbedingungen unbeeinflußt zu ermöglichen, ist es heute allgemein Üblich, die Übergangseinrichtungen mit einem Übergangsschutz zu umgeben. Als Übergangsschutz finden am häufigsten Faltenbälge Anwendung.

Bei Fahrzeugen, die enge Kurven durchfahren müssen, findet als Übergangseinrichtung häufig eine Scheibe Anwendung, die auf der Kupplungseinrichtung abgestützt ist und sich in einem Ausschnitt dreht, den die Fußböden beider miteinander gekuppelten Fahrzeuge umgrenzen. Diese Lösung hat sich insbesondere bei Gelenkomnibussen durchgesetzt. Beim Durchfahren enger Kurven insbesondere auf weniger guten Straßen treten erhebliche Relativbewegungen zwischen der Scheibe und den sie umgebenden Fußbodenbereichen auf, wodurch ein erheblicher Spalt zwischen der Drehscheibe bzw. Plattform und den sie umgebenden Fußbodenbereichen notwendig ist. Dieser Spalt stellt eine nicht unerhebliche Gefahrenquelle dar und es muß deshalb abgedeckt, d.h. für Personen im regelmäßigen Fahrbetrieb nicht zugänglich gemacht werden. In besonderem Maße gilt das für den Bereich zwischen der Drehscheibe und dem Faltenbalg, weil dort der Abstand zwischen Drehscheibe und Faltenbalg nur im Scheitelbereich der Drehscheibe relativ klein gehalten werden kann und mit zunehmendem Abstand von dem Scheitelbereich größer wird. Es hat sich deshalb allgemein eingeführt, den Spalt zwischen der Drehscheibe und den sie umschließenden Fußbodenausschnitten als tolerierbar hinzunehmen und sich darauf zu beschränken, den Spalt zwischen Drehscheibe und Faltenbalgseitenwänden abzudecken.

Aus der EP-A-215 329 ist eine gattungsgemäße Übergangseinrichtung bekannt, die als Lösung zur Spaltabdeckung eine Schürze zwischen jeder Seitenwand des Faltenbalges auf der einen Seite des Ringspaltes und der Plattform auf der anderen Seite des Ringspaltes vorschlagt. Diese Schürze hat, von der Plattform aus gemessen, etwa die Höhe eines Drittels der Seitenwand, sie ist am oberen Ende am Faltenbalg befestigt und mündet in geringem Abstand über der Plattformoberseite. Um die Schürze möglichst unauffällig zu machen, ist sie bei der bekannten Lösungen dem Faltenbalg entsprechend in Falten gelegt, sie hat also die Form des Balges bzw. eines Ziehharmonikabalges.

Faltenbalg und Schürze bestehen aus relativ schmalen Materialstreifen aus beschichtetem Gewebe und je zwei aufeinanderfolgende Materialstreifen sind entlang zweier zusammenstoßender Längskanten miteinander verbunden. Häufig erfolgt die Verbindung durch Kleben, Nähen oder mit Klemmrahmen, wobei oft mehrere dieser Methoden additiv zur Anwendung kommen. Allgemein üblich ist die Zuordnung eines inneren bzw. äußeren Rahmens zwar nicht zu jeder falte wohl aber in einer festgelegten Sequenz, so daß auf mehrere Kanten mit Nähten oder geklebten Streifenkanten eine Kante folgt, die in einem Rahmen gehalten ist. Dadurch kann der Faltenbalg gehindert werden, seine Kontur unzulässig zu ändern, insbesondere zwischen seinen Enden durchzuhängen, andererseits ist die mit Rücksicht auf den Wagenlauf zu fordernde Balgverformbarkeit nicht zu sehr zu beeinträchtigen.

Die vorliegende Erfindung befaßt sich nun mit der Verbindung zwischen Balgseitenwänden und Schürzen, wenn beide aus gefalteten Materialbahnen bestehen.

Aufgabe der Erfindung ist es, eine solche Verbindung besonders zweckmäßig auszubilden, was im einzelnen bedeutet, daß sie mit vertretbarem technischen Aufwand herstellbar sein soll, daß sie das Erscheinungsbild des Fahrzeugsüberganges nicht beeinträchtigen soll und daß sie mit geringem Aufwand an Arbeitszeit sowie technischen Hilfsmitteln und mit geringem Personaleinsatz montierbar und demontierbar sein soll.

Die Merkmale eines erfindungsgemäßen Balges, bei dem diese Forderungen erfüllt sind, ergeben sieh aus den Ansprüchen. Ein erfindungs- bzw. anspruchsgemäßer Faltenbalg ist nachfolgend anhand der Zeichnung erläutert. In der Zeichnung zeigen
Fig. 1 die Gesamtsituation im Bereich zwischen zwei gelenkig miteinander verbundenen Fahrzeugen, zwischen denen eine Übergangsrichtung und ein die Übergangsrichtung umgebender Übergangsschutz vorgesehen sind; dabei sind A und B vergrößerte Ausschnittswidergaben;
Fig. 2 ein Tragrahmen für die erfindungsgemäße Schürzenzuordnung zu einer Balgseitenwand als Explosionsdarstellung;
Fig. 3 den oberen Verbindungsbereich in einer Explosionsdarstellung und in größerer Darstellung;
Fig. 4,5 wesentliche Teile der erfindungsgemäßen Anordnung als Querschnitte;
Fig. 6 Seitenwand und Schürze nach der Zuordnung einer Schürze zu einer Seitenwand und
Fig. 7 Horizontalschnitte durch eine Balgseitenwand nach den Linien A-A, B-B, C-C in Fig. 6.

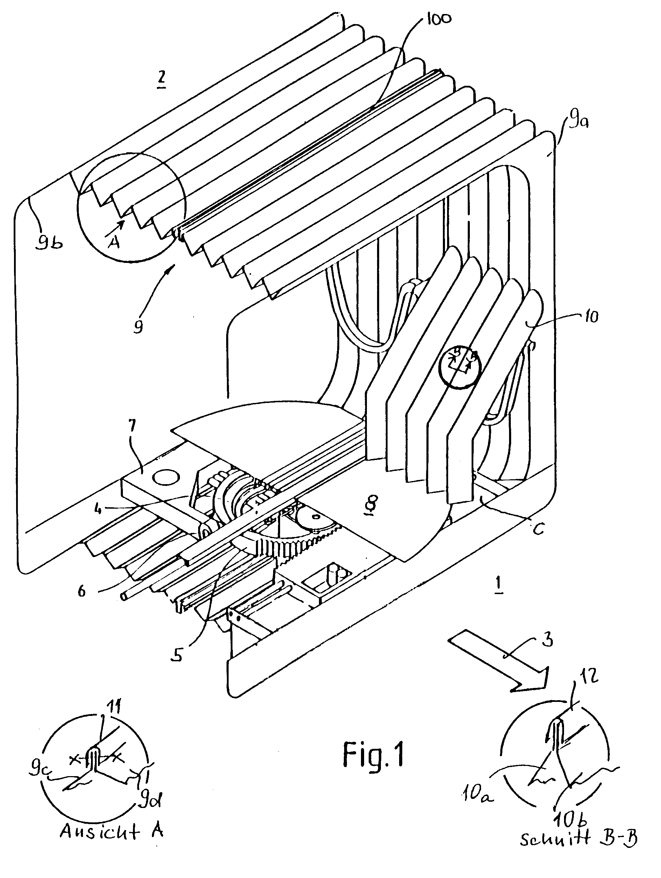

Gemäß Fig. 1 sind zwei Teilfahrzeuge 1, 2 eines Gelenkomnibusses in einem Drehkranzgelenk gelenkig miteinander verbunden. Durch die Fahrtrichtung 3 ist das Teilfahrzeug 1 als Vorderwagen, das Teilfahrzeug 2 als Hinterwagen ausgewiesen. Ein unterer Drehkranz 4 ist in geeigneter Weise fest dein Vorderwagen 1 zugeordnet. Auf dem unteren Drehkranz 4 am hinteren Ende des Vorderwagens 1 ist ein oberer Drehkranz 5 abgestützt, der mit seitlichen Zapfen 6 an den äußeren Enden der seitlichen Schenkel eines gabelförmigen Konsols 7 des Hinterwagens 2 gehalten ist. Auf dem Drehkranzgelenk 4, 5 bzw. dessen einem Drehkranz 4 oder 5 ist eine Drehscheibe 8 befestigt, die sieh mit zwei Abschnitten in einem runden Fußbodenausschnitt befindet, den die Fußböden vom Vorderwagen 1 und Hinterwagen 2 definieren. Mit den beiden übrigen Umfangsabschnitten befindet sieh die Drehscheibe vor den Innenseiten der Seitenwände eines die Übergangsrichtung mit der Drehscheibe 8 als Hauptteil umgebenden Übergangsschutzes in dar Form eines Faltenbalges 9, woraus sich ergibt, daß die Spaltbreite im Bereich der Fußbodenabschnitte und der den Seitenwänden nächsten Scheitelbereiche der Scheibe relativ klein sein mag, von diesen Scheitelbereichen zu den Fußbodenbereichen ein jedoch stark zunimmt, weil sich der Abstand der Scheibe von den Balgseitenwänden von den seitenwandnächsten Scheitelbereichen ausgehend rasch vergrößert, wie aus Fig. 1 ersehen werden kann (Abschnitt C).

Bei Relativbewegungen zwischen den beiden Drehkränzen 4, 5 um die Hochachse des Gelenkes, wenn der Gelenkomnibus eine Kurve durchfährt, dreht sich die Drehscheibe um die Hochachse relativ gegenüber den Fußböden von Vorderwagen 1 und Hinterwagen 2 sowie den Balgseitenwänden, weshalb zwischen den Fußböden und der Drehscheibe 8 der zur Gelenkhochachse konzentrische Spalt konstanter Breite vorgesehen sein muß und sich zwischen der Drehscheibe und den Balgseitenwänden der wie oben erläutert sieh verändernde Spalt befindet.

Das Drehkranzgelenk 4, 5 kuppelt die beiden Teilfahrzeuge gelenkig miteinander. Die Drehscheibe 8 ist wesentlicher Teil einer Übergangseinrichtung, die es Personen möglich macht, zwischen den beiden Teilfahrzeugen 1, 2 überzuwechseln. Um dieses Überwechseln von den Umgebungsverhältnisses unbeeinflußt möglich zu machen, ist die Übergangseinrichtung mit der Drehscheibe 8 von dem Übergangsschutz in der Form des Faltenbalges 9 umgeben, dessen Enden mittels Endrahmen 9a und 9b an den einander zugekehrten Stirnseiten der beiden Teilfahrzeuge befestigt ist und dabei Durchgangsöffnungen in den Stirnseiten umgebet. Während der bogenförmige Spalt zwischen der Drehscheibe und den Wagenfußböden relativ schmal gehalten werden kann und deshalb keine besondere Vorsichtsmaßnahme für überwechselnde Personen getroffen werden müssen, stellen die Ringspaltabschnitte zwischen Plattform und beiden Seitenwänden des Faltenbalges eine Gefahrenquelle dar, die durch je eine Schürze 10 abgedeckt wird. Am oberen Ende ist jede Schürze 10 an der Faltenbalgseitenwand befestigt, das untere Ende liegt mit geringen Abstand über der Drehscheibe 8. Grundsätzlich haben Faltenbalgseitenwände und Schürzen den gleichen Aufbau, d.h. jede Schürze ist wie die Seitenwand ein ziehharmonikaartig gefaltetes Tuch, das ein beschichtetes Gewebe ist.

Insoweit ist die gesamte Anordnung konventionell, eine Beschreibung weiterer Details ist, obwohl in Fig. 1 dargestellt, nicht erforderlich. Hierzu gehört auch noch, daß die Materialbahnen von Seitenwand und Schürze aus schmalen, aufeinanderfolgenden Materialstreifen 9c, 9d bzw. 10a, 10b bestehen, die entlang den einander zugeordneten Längskanten miteinander verbunden sind, was durch Kleben und Nähen erfolgen kann. Zumindest einige der Falten der Seitenwand, bei denen es sich um eine regelmäßige aufeinanderfolgende Zahl, also beispielsweise jede zweite oder dritte Falte handeln kann, sind in einem schienenförmigen Klemmprofil 11 gehalten. Entsprechendes gilt für die Schürze 10, bei der jeweils zwei Materialbahnen im Bereich der Längskanten in einem Klemmprofil 11 gehalten sind. Vorzugsweise ist das bei inneren und äußeren Faltenkanten der Fall, derart, daß die bestimmte Umfangskontur des Faltenbalges bzw. Kontur der Schürze gewährleistet ist, ohne daß die Verformbarkeit des Balges entsprechend den Relativbewegungen zwischen den beiden Teilfahrzeugen 1, 2 beeinträchtigt wäre.

Erfindungsgemäß ist nun jede der beiden gleichen Schürzen 10 des Faltenbalges eine vorgefertigte Einheit wie folgt.

Eine gerade Schiene bzw. ein gerades Strangprofil 12 hat den Querschnitt einer Rinne mit den beiden Schenkein 12a, 12b und dem die Schenkel bzw. Seitenwände bzw. Leisten 12a, 12b an den einen Enden miteinander verbindenden Steg 12c. An den Innenseiten der Schenkel 12a, 12b an den dem Steg 12c abgekehrten, freien Enden sind die Schenkel mit reibungserhöhenden Mitteln 13 versehen. Der Abstand zwischen den Innenseiten der Schenkel 12a, 12b ist so bemessen, daß das Strangprofil bzw. die Schiene 12 nach der noch zu beschreibenden Fertigstellung der Schürze auf eine Innenfalte der einen Balgseitenwand aufgesteckt werden kann; die Ausbildung einer solchen Innenfalte ergibt sieh aus der vorstehenden Beschreibung und dem Aussschnitt der Fig. 1. Der Steg 12c des Strangprofils 12 weist eine Längsbohrung 14 auf. Auf der den Schenkeln 12a, 12b abgekehrten Seite des Steges 12c des Strangprofils 12 ist an den Steg eine leistenförmige Fahne 12d angeformt. Bei dem Strangprofil 12 kann es sich - wie bei den Abschnitten des noch zu beschreibenden Profils 15 - um ein stranggepreßtes bzw. extrudiertes Profil aus einer Leichtmetall-Legierung handeln.

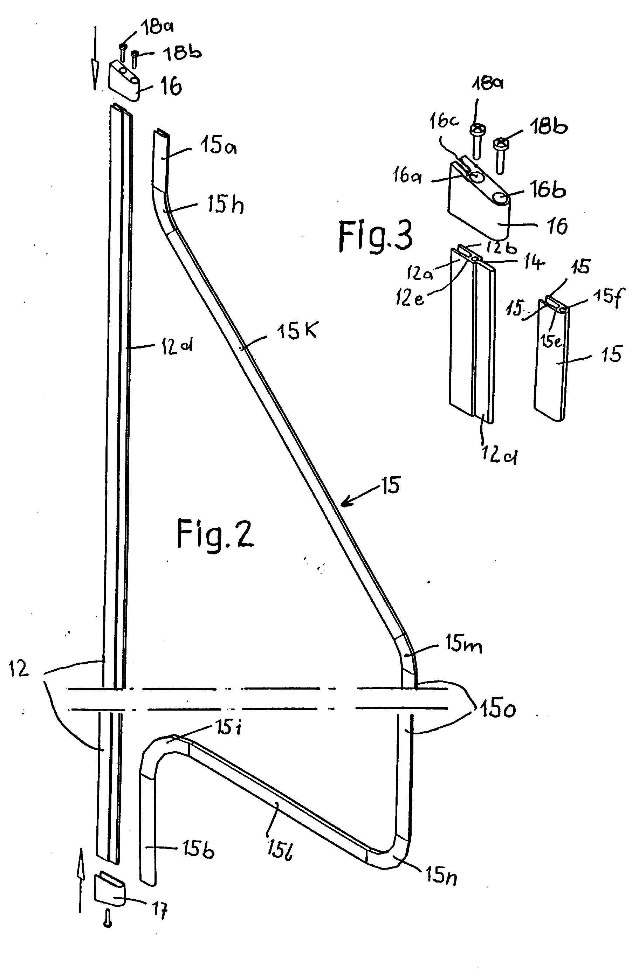

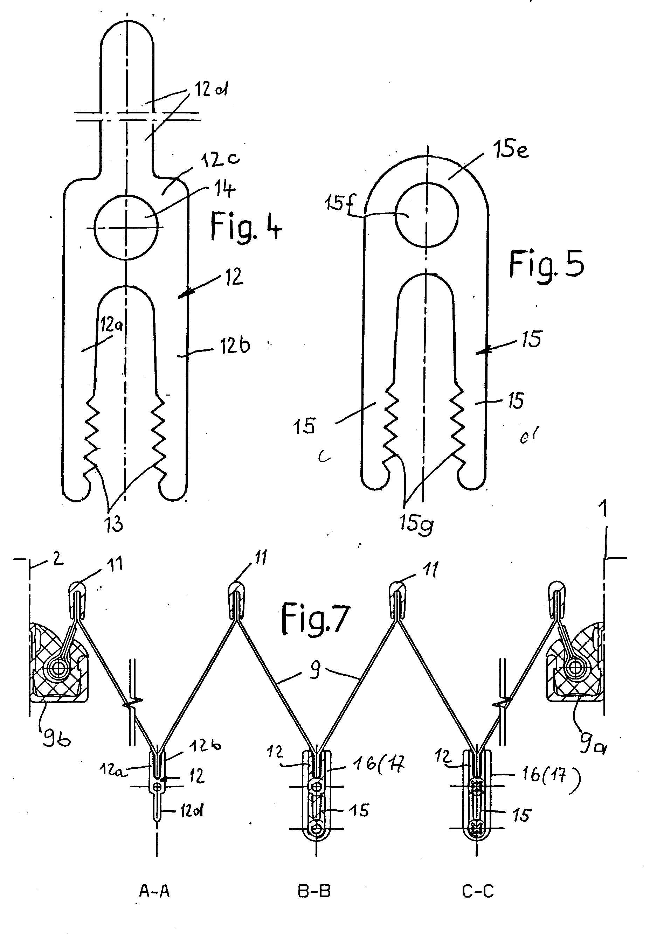

Eine zweite Schiene bzw. ein zweites Strangprofil 15 hat die Form eines Bügels. Der Bügel 15 weist gerade Endabschnitte 15a, 15b auf, die für die Zuordnung zu der Schiene bzw. dem Strangprofil 12 parallel zu der Schiene bzw. dem Strangprofil 12 verlaufen und deren bzw. dessen Querschnitt dem Querschnitt der Schiene bzw. des Strangprofils 12 entspricht mit der Maßgabe, daß der Abstand zwischen den Innenseiten der Schenkel 15c, 15d so bemessen ist, daß die bügelförmige Schiene bzw. das bügelförmige Strangprofil 15 mit ihren bzw. seinen Endabschnitten 15a, 15b auf die Fahne 12d der Schiene bzw. des Strangprofils 12 aufgesteckt werden kann und daß ein der Fahne 12d der Schiene bzw. des Strangprofils 12 entsprechendes Teil beim Strangprofil 15 fehlt. Ansonsten weist auch das Strangprofil 15 einen Steg 15e mit einer Längsbohrung 15f sowie reibungserhöhende Mittel 15g an den Innenseiten der freien Schenkelenden auf. Die Kontur der Abschnitte 15a und 15b ergibt sich aus Fig. 3,5.

An den einander zugekehrten Enden der Endabschnitte 15a, 15b (Fig. 2) schließt sieh je ein Übergangsbogen 15h bzw. 15i und an jeden Übergangsbogen 15h bzw. 15i ein gerader Mittel- bzw. Verbindungsabschnitt 15k bzw. 15l an und beide Verbindungsabschnitte 15k bzw. 15l sind an den den Übergangsbogen 15h bzw. 15i abgekehrten Enden über weitere Übergangsbogen 15m bzw. 15n an einen zu den Endabschnitten 15a, 15b parallelen geraden Abschnitt 15o angeschlossen. Die Abschnitte 15h bis 15o können im Prinzip beliebige Querschnitte haben. Im Einbauzustand verläuft der untere Verbindungsabschnitt 15l in geringem Abstand über der Drehscheibe 8 parallel zu dieser, d.h. im wesentlichen horizontal, während der Verbindungsabschnitt 15k so nach unten geneigt verläuft, wie es die Schräge der Oberseite der Schürze 10 erfordert, wie generell die Kontur und die Abmessung des bügelförmigen Profils 15 sich insbesondere aus der Kontur und der Abmessung der Schürze 10 ergeben bzw. umgekehrt das Strangprofil 15 die Kontur der Schürze 10 bestimmt.

Das bügelförmige Strangprofil 15 wird nun mit seinen Endabschnitten 15a, 15b auf das gerade Strangprofil bzw. die Schiene 12 insbesondere deren Fahne 12d aufgesteckt und beide Profile 15, 12 werden miteinander verbunden. Zweckmäßigerweise erfolgt das mittels Kappen 16, 17, von denen je eine über die oberen bzw. unteren Enden der beiden Schienen bzw. Strangprofile 12, 15 gestülpt wird und deren Deckel Löcher und Schlitze haben, was nur anhand der oberen Kappe 16 erläutert wird, weil die untere Kappe 17 in entsprechender Weise ausgebildet ist. Die Löcher 16a, 16b sind im Kappendeckel achsgleich zu den Längsbohrungen 14 und 15f, der Schlitz 16c ist dem Schlitz zwischen den Leisten 12a, 12b des Profils bzw. Schiene 12 entsprechend angeordnet und ausgebildet. In die Enden der Bohrungen 14, 15f sind vorher Gewinde eingeschnitten worden, so daß in sie durch die Löcher in den Deckeln der Kappen 16, 17 hindurchgeführte Schrauben 18a, 18b eingeschraubt werden können und danach mittels der Schrauben 18a, 18b und der Kappen 16, 17 die beiden Profile 12 und 15 miteinander verbunden sind und einen geschlossenen Rahmen bilden.

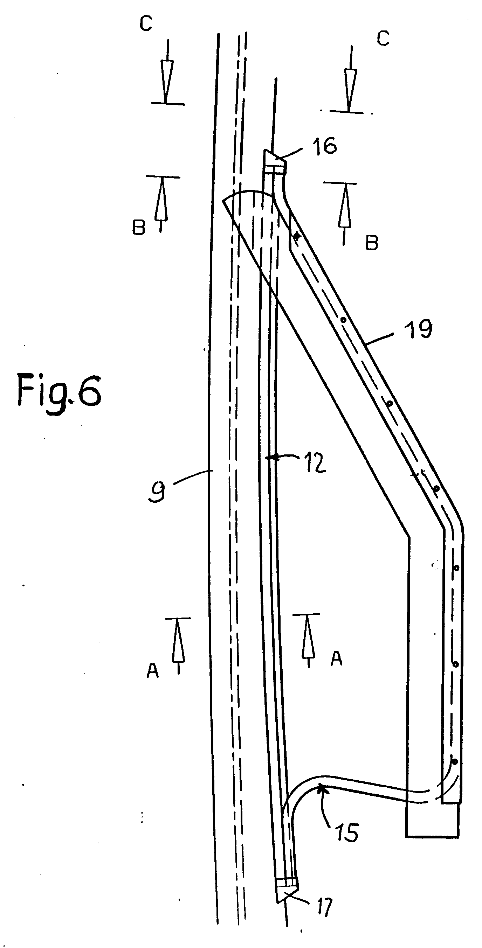

Einer Anzahl derart Zusammengestellter Rahmen wird nun der in Falten gelegten Materialbahn der Schürze 10 zugeordnet, indem in einige ausgewählte zur Seitenwand hin offene Falten der Schürze 10 jeweils ein solcher Rahmen eingelegt wird und Abdeckschienen 19 aufgelegt und in dieser Position gesichert werden (Fig. 6).

Die auf diese Weise montierte Schürze wird dem Faltenbalg zugeordnet, indem die Profile 12 mit ihren insoweit in Grenzen federnden Schenkeln 12a, 12b über entsprechende Innenfalten des Faltenbalges aufgesteckt und festgeklemmt werden.

Montage und Demontage der Schürzen sind so auf einfache Weise, ohne daß besondere Werkzeuge zu Hilfe genommen werden müßten, möglich.

Die jeweilige Schürze 10 kann sich einteilig von einem Seitenwandende (Endrahmen 9a oder 9b) bis zum anderen Seitenwandende (Endrahmen 9b bzw. 9a) erstrecken, während der Faltenbalg 9 zwischen den Enden geteilt sein kann und die beiden Teilbälge an den einander zugekehrten Enden durch Mittelrahmen 100 miteinander verbunden sind.

## Patentansprüche

1. Übergangseinrichtung mit folgenden Merkmalen:
- ein Faltenbalg (9) ist als Übergangsschutz zwischen zwei über eine Gelenkverbindung miteinander verbundenen Fahrzeugen (1,2) versehen,
- die Seitenwände des Faltenbalges bestehen aus Materialstreifen (9c,9d), von denen jeweils zwei an den einander zugehörigen Längskanten durch ein aufgestecktes schienenförmiges Klemmprofil (11) miteinander verbunden sind,
- jeder Seitenwand ist im unteren Bereich eine Schürze (10) zugeordnet, die einen Spalt (c) überbrückt, der zwischen der Seitenwand und einer Plattform bzw. Drehscheibe (8) der Gelenkverbindung besteht,
- die Schürze ist den Seitenwänden entsprechend gefaltet und besteht ebenfalls aus Materialstreifen, von denen jeweils zwei an den einander zugehörigen Längskanten im Bereich von schienen- und bogenförmigen Profilen (15) miteinander verbunden sind und die eine Materialbahn (10a,10b) bilden,
- die Profile der Schürzen sind an ihren oberen Enden mit den Klemmprofilen (11) der jeweiligen Seitenwand zusammengeführt,
- die Profile haben zwischen ihren Enden jedoch einen den Spalt (c) überbrückenden, vor der jeweiligen Seitenwand entsprechend beabstandeten Verlauf,
gekennzeichnet durch folgende weitere Merkmale:
- jede Schürze (10) besteht als eine Baueinheit aus einer Anzahl von zur Seitenwand des Faltenbalges parallel verlaufenden geraden Strangprofilen (12) und einer entsprechenden Anzahl von bogenförmigen Strangprofilen (15) sowie der Materialbahn (10a,10b), wobei die bogenförmigen Strangprofile (15) Abschnitte (15o) aufweisen, die zur Seitenwand des Faltenbalges entferntest sind, und obere Endabschnitte (15a) enthalten, über die sie an die geraden Strangprofile (12) angeschlossen sind,
- die Materialbahn (10a,10b) ist den bogenförmigen Strangprofilen (15) zugeordnet,
- jedes gerade Strangprofil (12) weist Seitenwände (12a, 12b) einer Rinne auf zum Aufstecken auf innere Randprofile der jeweiligen Seitenwand (9) des Faltenbalges, und
- in dem durch das gerade Strangprofil (12) und den entferntesten Abschnitt (15o) des bogenförmigen Strangprofils (15) definierten Bereich verläuft der zu überbrückende Spalt (c).

2. Übergangseinrichtung nach Anspruch 1, **dadurch gekennzeichnet, daß** jeweils ein gerades und ein zugeordnetes bogenförmiges Strangprofil (12 und 15) einen geschlossenen Rahmen bilden, wobei das bogenförmige Strangprofil (15) auch in einer unteren Anschlußstelle (17) an das gerade Strangprofil angeschlossen ist.

3. Übergangseinrichtung nach Anspruch 1 oder 2, **dadurch gekennzeichnet, daß** jedes bogenförmige Strangprofil (15) in seinem oberen und gegebenenfalls unteren Bereich je einen zum geraden Strangprofil (12) parallelen Endabschnitt (15a, 15b) aufweist, der rinnenförmig mit Seitenwänden (15c, 15d) ausgebildet und auf das gerade Strangprofil aufsteckbar ist.

4. Übergangseinrichtung nach Anspruch 2 oder 3, **gekennzeichnet durch folgende Merkmale:**
- der zur jeweiligen Seitenwand des Faltenbalges entfernteste Abschnitt (15o) jedes bogenförmigen Strangprofils (15) liegt parallel zu den beiden Endabschnitten (15a, 15b),
- jedes bogenförmige Strangprofil (15) weist einen oberen Verbindungsabschnitt (15k) und einen unteren Verbindungsabschnitt (15l) auf,
- der jeweilige Verbindungsabschnitt (15k, 15l) liegt zwischen dem zugehörigen Endabschnitt (15a, 15b) und dem entferntesten Abschnitt (15o),
- der untere Verbindungsabschnitt (15l) verläuft in geringem Abstand parallel über der Drehscheibe (8),
- der obere Verbindungsabschnitt (15k) verläuft derart schräg, daß der Abstand zwischen oberer und unterer Anschlußstelle der Endabschnitte (15a, 15b) wesentlich größer ist als der Abstand zwischen oberem und unterem Ende des entferntesten Abschnittes (15o).

5. Übergangseinrichtung nach Anspruch 4, **dadurch gekennzeichnet, daß** die parallelen Abschnitte (15a, 15b, 15o) eines jeden bogenförmigen Strangprofils (15) durch jeweils einen Übergangsbogen (15h, 15i, 15m, 15n) miteinander verbunden sind.

6. Übergangseinrichtung nach Anspruch 3 oder 4, **gekennzeichnet durch folgende Merkmale:**
- jedes gerade und jedes bogenförmige Strangprofil (12 und 15) hat im Bereich ihrer Anschlußstellen in gleicher Weise den Querschnitt einer Rinne mit parallelen Seitenwänden (12a, 12b bzw. 15c, 15d),
- der Abstand zwischen den die Seitenwände bildenden Leisten (12a, 12b) des geraden Strangprofils (12) ergibt sich aus der Breite der Innenfalten der Seitenwand des Faltenbalges,
- der Abstand zwischen den die Seitenwände bildenden Leisten (15c, 15d) der beiden Endabschnitte (15a, 15b) des bogenförmigen Strangprofils (15) ergibt sich aus der Breite einer Fahne (12d), die an dem geraden Strangprofil (12) angebracht und über einen Steg (12c) mit dessen Leisten (12a, 12b) verbunden ist, wobei die Fahne (12d) zu den Leisten (12a, 12b) entgegengesetzt gerichtet ist,
- die Leisten der jeweiligen Endabschnitte (15a, 15b) des bogenförmigen Strangprofils (15) sind auf die Fahne (12d) des geraden Strangprofils (12) aufsteckbar.

7. Übergangseinrichtung nach Anspruch 6, **dadurch gekennzeichnet, daß** zur Verbindung zwischen den Enden jedes geraden Strangprofils (12) und der Endabschnitte (15a, 15b) des jeweiligen bogenförmigen Strangprofils (15) auf beide Strangprofile (12, 15) Kappen (16, 17) aufgesteckt und mit beiden Strangprofilen (12, 15) fest verbunden sind.

## Claims

1. A gangway system having the following features:
- a gangway protection in the form of a bellows (9) is provided between two vehicles (1, 2) joined together by an articulate connection,
- the side walls of the bellows are strips of material (9c, 9d), pairs of which are connected together at their associated longitudinal edges by a rail-like clamping profile (11) mounted on them,
- the lower region of each side wall is associated with an apron (10) which bridges a gap (c) between the side wall and a platform or turntable (8) belonging to the articulated connection,
- the apron is folded to correspond to the side walls and likewise consists of strips of material, pairs of which are interconnected at their associated longitudinal edges in the neighbourhood of rail-like and arcuate profiles (15) and form a web of material (10a, 10b),
- the apron profiles are joined at their top ends by the profiles (11) which clamp the respective side wall, but
- the profiles between their ends have a configuration which bridges the gap (c) and is at a corresponding distance from the respective side wall,
characterised by the following additional features:
- each apron (10) is a structural unit comprising a number of straight extruded profiles (12) extending parallel to the side wall of the bellows, a corresponding number of arcuate extruded profiles (15) and the web (10a, 10b) of material, wherein the arcuate extruded profiles (15) have portions (150) which are most remote from the side walls of the bellows and contain upper end portions (15a) via which they are connected to the straight extruded profiles (12),
- the web (10a, 10b) of material is associated with the arcuate extruded profiles (15),
- each straight extruded profile (12) has side walls (12a, 12b) of a channel for mounting on inner edge profiles of the respective side wall (9) of the bellows, and
- the gap (c) to be bridged extends in the region defined by the straight extruded profile (12) and the most remote portion (150) of the arcuate extruded profile (15).

2. A gangway system according to claim 1, characterised in that in each case a straight and an associated arcuate extruded profile (12 and 15) form a closed frame, the arcuate extruded profile (15) also being connected to the straight extruded profile at a lower connecting place (17).

3. A gangway system according to claim 1 or 2, characterised in that each arcuate extruded profile (15), in its upper and optionally lower region, has an end portion (15a, 15b) parallel to the straight extruded profile (12) and in the form of a channel with side walls (15c, 15d) for mounting on the straight extruded profile.

4. A gangway system according to claim 2 or 3, characterised by the following features:
- the portion (150) of each arcuate extruded profile (15) most remote from the respective side wall of the bellows lies parallel to the two end portions (15a, 15b),
- each arcuate extruded profile (15) has an upper connecting portion (15k) and a lower connecting portion (15l),
- each respective connecting portion (15k, 15l) lies between the associated end portion (15a, 15b) and the most remote portion (150),
- the lower connecting portion (15l) extends at a short distance parallel to and over the turntable (8), and
- the upper connecting portion (15k) slopes in such a way that the distance between the upper and lower connecting place of the end portions (15a, 15b) is considerably greater than the distance between the upper and lower end of the most remote portion (150).

5. A gangway system according to claim 4, characterised in that the parallel portions (15a, 15b, 150) of each arcuate extruded profile (15) are interconnected by a respective transitional curved member (15h, 15i, 15m, 15n).

6. A gangway system according to claim 3 or 4, characterised by the following features:
- each straight and each arcuate extruded profile (12 and 15), at the places where they are connected, uniformly has the cross-section of a channel with parallel side walls (12a, 12b or 15c, 15d),
- the distance between the strips (12a, 12b) forming the side walls of the straight extruded profile (12) depends on the width of the inner folds of the side wall of the bellows,
- the distance between the strips (15c, 15d) forming the side walls of the two end portions (15a, 15b) of the arcuate extruded profile (15) depends on the width of a lug (12d) disposed on the straight extruded profile (12) and connected by a web (12c) to the strips (12a, 12b) thereof, the lug (12d) extending in the opposite direction to the strips (12a, 12b), and
- the strips of the respective end portions (15a, 15b) of the arcuate extruded profile (15) are for mounting on the lug (12d) of the straight extruded profile (12).

7. A gangway system according to claim 6, characterised in that in order to connect the ends of each straight extruded profile (12) to the end portions (15a, 15b) of the respective arcuate extruded profile (15), caps (16, 17) are mounted on both extruded profiles (12, 15) and firmly secured thereto.

## Revendications

1. Dispositif d'intercirculation présentant les particularités suivantes :
- un soufflet (9) est prévu en tant que protection d'intercirculation entre deux véhicules routiers (1, 2) reliés l'un à l'autre par une liaison articulée,
- les parois latérales du soufflet sont constituées de bandes de matériau (9c, 9d) dont deux sont, à chaque fois, reliées l'une à l'autre sur leurs arêtes longitudinales correspondantes au moyen d'un profilé d'accrochage (11) en forme de rail qui est monté dessus,
- à chaque paroi latérale est associé, dans la zone inférieure, un tablier (10) qui recouvre un espace (c) qui existe entre la paroi latérale et une plate-forme ou un plateau tournant (8) de la liaison articulée
- le tablier est plié de manière correspondante aux parois latérales et est également constitué de bandes de matériau dont deux sont, à chaque fois, reliées l'une à l'autre sur leurs arêtes longitudinales correspondantes, dans la zone de profilés (15) en forme de rail et en forme d'arceau et qui forment un tapis de matériau (10a, 10b),
- les profilés des tabliers sont réunis par leurs extrémités supérieures les profilés d'accrochage (11) de la paroi latérale respective,
- les profilés ont cependant, entre leurs extrémités, un tracé recouvrant l'espace (c) et disposé à distance de manière correspondante devant la paroi latérale respective,
caractérisé par les autres caractéristiques suivantes :
- chaque tablier (10) est constitué, sous la forme d'une unité structurelle, d'un certain nombre de profilés filés droits (12) s'étendant parallèlement à la paroi latérale du soufflet et d'un nombre correspondant de profilés filés en forme d'arceau (15) ainsi que du tapis de matériau (10a, 10b) les profilés filés en forme d'arceau (15) comprenant des segments (15o), qui sont le plus éloignés par rapport à la paroi latérale du soufflet, et des segments d'extrémité supérieurs (15a) par l'intermédiaire desquels les profilés filés en forme d'arceau (15) sont reliés aux profilés filés droits (12),
- le tapis de matériau (10a, 10b) est associé avec les profilés filés en forme d'arceau (15),
- chaque profilé filé droit (12) comporte des parois latérales (12a, 12b) d'une gouttière pour son engagement sur des profilés de bord internes de la paroi latérale respective (9) du soufflet, et
- l'espace (c) à recouvrir s'étend dans la zone définie par le profilé filé droit (12) et le segment le plus éloigné (15o) du profilé filé en forme d'arceau (15).

2. Dispositif d'intercirculation selon la revendication 1, **caractérisé en ce que**, à chaque fois, un profilé filé droit (12) et un profilé filé en forme d'arceau (15) forment un cadre formé, le profilé filé en forme d'arceau (15) étant également raccordé, dans un emplacement de raccordement inférieur (17) au profilé filé droit.

3. Dispositif d'intercirculation selon la revendication 1 ou 2, **caractérisé en ce que** chaque profilé filé en forme d'arceau (15) comporte, dans sa zone supérieure et, éventuellement, dans sa zone inférieure, à chaque fois, un segment d'extrémité (15a, 15b) parallèle au profilé filé droit (12) et qui est conformé en forme de gouttière comportant des parois latérales (15c, 15d) et peut être engagé sur le profilé filé droit.

4. Dispositif d'intercirculation selon la revendication 2 ou 3, **caractérisé par les caractéristiques suivantes :**
- le segment (15o) de chaque profilé filé en forme d'arceau (15) le plus éloigné de la paroi latérale respective du soufflet est parallèle aux deux segments d'extrémité (15a, 15b),
- chaque profilé filé en forme d'arceau (15) comporte un segment de liaison supérieur (15k) et un segment de liaison inférieur (15l),
- le segment de liaison respectif (15k, 15l) se trouve entre le segment d'extrémité adjoint (15a, 15b) et le segment le plus éloigné (15o),
- le segment de liaison inférieur (15l) s'étend à une faible distance parallèlement au dessus du plateau tournant (8),
- le segment de liaison supérieur (15k) s'étend d'une maniere oblique telle que la distance entre les emplacements de raccordement supérieur et inférieur des segments d'extrémité (15a, 15b) est beaucoup plus grande que la distance entre les extrémités supérieure et inférieure du segment le plus éloigné (15o).

5. Dispositif d'intercirculation selon la revendication 4, **caractérisé en ce que** les segments parallèles (15a, 15b, 15o) de chacun des profilés filés en forme d'arceau (15) sont reliés l'un à l'autre par un arceau de transition respectif (15h, 15i, 15m, 15n).

6. Dispositif d'intercirculation selon la revendication 3 ou 2, **caractérisé par les caractéristiques suivantes :**
- chacun des profilés filés droit et en forme d'arceau (12, 15) présente, dans la zone de ses emplacements de raccordement, de manière identique, la même section d'une gouttière comportant des parois latérales parallèles (12a, 12b, respectivement 15c, 15d),
- la distance entre les barrettes (12a, 12b) du profilé filé droit (12) formant les parois latérales est obtenue à partir de la largeur des plis internes du soufflet,
- le distance entre les barrettes (15c, 15d) des deux segments d'extrémité (15a, 15b) du profité filé en forme d'arc (15) formant les parois latérales est obtenue à partir de la largeur d'une queue (12d) qui est rapportée sur le profilé filé droit (12) et est reliée aux barrettes (12a, 12b) de ce dernier par l'intermédiaire d'une traverse (12c), la queue (12d) étant dirigée à l'opposé des barrettes (12a, 12b)
- les barrettes des segments d'extrémité respectifs (15a, 15b) du profilé filé en forme d'arceau (15) peuvent être engagées sur la queue (12d) du profilé filé droit (12).

7. Dispositif d'intercirculation selon la revendication 6, **caractérisé en ce que**, pour la liaison entre les extrémités de chaque profilé filé droit (12) et les segments d'extrémité (15a, 15b) du profilé filé en forme d'arc (15) respectif, des capuchons (16, 17) sont engagés sur les deux profilés filés (12, 15) et reliés de manière fixe aux deux profilés filés (12, 15).
